# EUROPEAN PATENT APPLICATION

(11) **EP 2 923 905 A1**
(43) Date of publication of application: **30.09.2015**
(21) Application number: 12888664.5
(22) Date of filing: 24.11.2012
(51) Int. Cl.: B60T 8/172, B60W 40/09, G08G 1/00

(54) **VEHICLE STATE DETERMINATION DEVICE, VEHICLE STATE DETERMINATION METHOD, AND DRIVING OPERATION DIAGNOSIS DEVICE**

(71) Applicant: TOYOTA JIDOSHA KABUSHIKI KAISHA, Toyota-shi, Aichi-ken, 471-8571 (JP)
(72) Inventor: MATSUMURA, Takeshi, Toyota-shi, Aichi 471-8571 (JP); OKADA, Hiroki, Toyota-shi, Aichi 471-8571 (JP)
(74) Representative: D Young & Co LLP
(86) International application number: PCT/JP2012/080400
(87) International publication number: WO 2014/080507

(57) **Abstract**

Provided is a vehicle state determination device that is capable of suitably determining the state of a vehicle from limited information, such as acceleration, obtained from sensors. The vehicle state determination device determines the operating state of the brakes of the vehicle on the basis of information obtained from an acceleration sensor. A data log unit (40) stores, over time, the acceleration (Sar) acquired from the acceleration sensor. A stop detection unit (44) issues an instruction to start determining the operating state of the brakes on the basis of the timing of the end of a braking operation, which is estimated on the basis of the fact that the amount of change in the acceleration (Sar) is less than a prescribed value. A first range selection unit (21) refers to the acceleration (Sar), which is stored in the data log unit (40), toward the past from the time at which an instruction to start determining the operating state of the brakes was issued, and establishes a period in which the acceleration (Sar) is decreasing toward the past as an exclusion period. An operation time specifying unit (23) specifies a time at which the brake operation started on the basis of changes in the acceleration (Sar) in a target period, which is a period further in the past than the exclusion period.

## Description

### TECHNICAL FIELD

The present invention relates to a vehicle state determination device that determines a vehicle state based on acceleration information, a vehicle state determination method that is used in the vehicle state determination device, and a driving operation diagnosis device that is provided with the vehicle state determination device.

### BACKGROUNDART

As generally known, there is a driving operation diagnosis device that detects driving operation by the driver such as steering wheel operation, accelerator operation, and brake operation, thereby performing a diagnosis of whether the driving operation by the driver is appropriate based on the thus detected driving operation, a vehicle speed, and the like. Conventionally, such a driving operation diagnosis device detects driving operation by the driver based on various types of information such as speed information and information on the brake operation obtained from various types of sensors installed in a vehicle. Moreover, for example, one example of an on-vehicle device having functions of the driving operation diagnosis is disclosed in Patent Document 1.

The device disclosed in Patent Document 1 is a navigation device that is capable of performing a driving diagnosis of a vehicle. In a situation where the driving diagnosis is performed, that is, where the vehicle enters an intersection or where the vehicle enters a main line of an express way, this device calculates a difference between acceleration of the vehicle measured by an acceleration sensor and acceleration of the vehicle determined based on a vehicle speed and an angular velocity of the vehicle. The device then performs the driving diagnosis of the vehicle based on the acceleration of the vehicle measured by the acceleration sensor only when the calculated difference is within a predetermined value.

### PRIOR ART DOCUMENTS

### Patent Documents

Patent Document 1: Japanese Laid-Open Patent Publication No. 2010-38643

### SUMMARY OF THE INVENTION

### Problems that the Invention is to Solve

Moreover, in recent years, unlike the device disclosed in Patent Document 1 and the like, portable information processing devices that are not installed in a vehicle but carried into the vehicle whenever necessary have gained attention. Some of the portable information processing devices are not only able to process various types of programs and display the results thereof as images but also able to be provided with a position sensor that uses a GPS signal to identify the current position and an acceleration sensor that measures acceleration information. That is, it has been considered that information obtained from sensors installed in a portable information processing device is utilized for performing a driving diagnosis. However, it is not easy to perform a diagnosis of driving operation by the driver by determining a vehicle state by only referring to information that is obtained from a limited number of sensors that are not intended to detect the vehicle state.

Thus, the portable information processing device may be used to obtain information from various types of sensors installed in a vehicle. However, there is a concern that information obtained by using an information processing device that is an external device for a vehicle may be restricted in terms of real time properties, accuracy, and the like. For example, even if a portable information processing device is able to obtain information from various types of sensors installed in a vehicle via data communications, the data communications with an external device are not given a high priority. Therefore, there is a concern that real time properties may not be sufficiently obtained in determining the vehicle state and, furthermore, in performing a diagnosis of driving operation by the driver.

It is an objective of the present invention to provide a vehicle state determination device that is capable of determining a vehicle state appropriately even from limited information such as acceleration obtained from sensors, a vehicle state determination method that is used in the vehicle state determination device, and a driving operation diagnosis device that is provided with the vehicle state determination device.

### Means for Solving the Problems

Means for achieving the above objective and advantages thereof will now be discussed.

To achieve the foregoing objective and in accordance with one aspect of the present invention, a vehicle state determination device is provided that determines an operation state of a brake of a vehicle based on information obtained from an acceleration sensor. The vehicle state determination device includes a storage section, a determination starting instruction section, an exclusion period-of-time selecting section, and an operation start identifying section. The storage section chronologically stores acceleration obtained from the acceleration sensor. The determination starting instruction section instructs the start of determining the operation state of the brake based on a time point of terminating the brake operation. The time point is estimated based on a fact that an amount of change of the obtained acceleration is less than a predetermined value. The exclusion period-of-time selecting section refers to the acceleration stored in the storage section from a time point when the determination starting instruction section instructs the start of determination toward the past, thereby selecting, as an exclusion period-of-time, a period of time in which the referenced acceleration decreases toward the past. For a target period of time, which is before the selected exclusion period-of-time, the operation start identifying section identifies a time point when the brake operation is started based on changes in acceleration in the target period of time.

To achieve the foregoing objective and in accordance with one aspect of the present invention, a vehicle state determination method is provided that is used in a vehicle state determination device for determining an operation state of a brake of a vehicle based on information obtained from an acceleration sensor, thereby determining the operation state of the brake of the vehicle. The vehicle state determination method includes: a step for causing a storage section to chronologically store acceleration obtained from the acceleration sensor; a determination start instruction step for instructing the start of determining the operation state of the brake based on a time point of terminating the brake operation, the time point being estimated based on a fact that an amount of change of the obtained acceleration is less than a predetermined value; an exclusion period-of-time selecting step for referring to the acceleration stored in the storage section from a time point when the start of determination is instructed in the determination start instruction step toward the past, thereby selecting, as an exclusion period-of-time, a period of time in which the referenced acceleration decreases toward the past; and an operation start identifying step, in which, for a target period of time, which is before the selected exclusion period-of-time, a time point when the brake operation is started based on changes in acceleration in the target period of time is identified.

According to the configuration or the method, upon determination of the time point when the brake operation is started with reference to a change in acceleration obtained from the acceleration sensor, it is possible to appropriately exclude the period of time in which no brake operation is started. The period of time that is unrelated to the start of the brake operation is excluded to restrain false detection of a time point of starting the brake operation, thus making it possible to reliably determine the vehicle state based on the acceleration detected by the acceleration sensor. Further, processing of information necessary for detecting the time point of starting the brake operation can be reduced to quickly determine the vehicle state. Still further, according to the thus determined mode, even in such a case in which the acceleration sensor is installed in a portable information processing device, it is possible to determine the state of the brake operation with high accuracy based on the thus obtained acceleration.

In the vehicle state determination device, the exclusion period-of-time selecting section preferably selects a period of time from the time point when the start of determination is instructed to a time point in the past when the acceleration becomes minimum as a period of time in which the referenced acceleration decreases toward the past.

In the vehicle state determination method, the exclusion period-of-time selecting step preferably includes selecting a period of time from the time point when the start of determination is instructed to a time point in the past when acceleration becomes minimum as a period of time in which the referenced acceleration decreases toward the past.

According to the configuration or the method, the period of time including the time point at which the acceleration becomes minimum can be easily identified to reduce computation load and the like, related to calculation of the exclusion period of time. That is, it is possible to further reduce processing load and improve responsiveness.

In the vehicle state determination device, on the condition that the acceleration is equal to or less than 0 [m/s²], the operation start identifying section preferably identifies the time point when the brake operation is started from the target period of time.

In the vehicle state determination method, in the operation start identifying step, on the condition that the acceleration is equal to or less than 0 [m/s²], the time point when the brake operation is started is preferably identified from the target period of time.

The brake operation by the driver is characterized in that acceleration often undergoes small changes, although being gradually decreased in the vicinity of 0 [m/s²] before the start of the brake operation. Therefore, according to the configuration or the method, on the condition that acceleration is equal to or less than 0 [m/s²], the time point when the brake operation is started is searched. Thereby, since a search range of the time point when the brake operation is started can be reliably narrowed down, it is expected to improve the detection accuracy and attain the quick computation processing.

In the vehicle state determination device, the acceleration within the target period of time is preferably an average of acceleration in a predetermined sampling period of time.

In the vehicle state determination method, the acceleration within the target period of time is preferably an average of acceleration in a predetermined sampling period of time.

According to the configuration or the method, since the vehicle inevitably undergoes a certain variation in measurements of acceleration, the average of measurements of acceleration obtained in a predetermined sampling time is used to appropriately reflect the trend of changes in acceleration. For example, it is possible to search for the time point when the brake operation is started with reference to the range in which the average of acceleration free of influences of a temporary change in acceleration is equal to or less than 0 [m/s²]. It is, thereby, possible to lower the risk that the temporary change in acceleration may influence determination of the time point when the brake operation is started.

In the vehicle state determination device, the operation start identifying section preferably identifies the time point when the brake operation is started from the target period of time on the condition that the acceleration is equal to or greater than -1.0 [m/s²].

In the vehicle state determination method, the time point when the brake operation is started is preferably identified from the target period of time on the condition that acceleration is also equal to or greater than -1.0 [m/s²].

According to the configuration or the method, since a large negative acceleration is generated upon the brake operation by the driver, an acceleration range for deceleration smaller in absolute value than acceleration occurring upon the brake operation, that is, -1.0 [m/s²] or more, is set as a condition of identifying the time point when the brake operation is started. Thereby, a target period of time for identification can be narrowed down to a greater extent, and therefore, determination of the time point when the brake operation is started is further improved.

In the vehicle state determination device, the operation start identifying section preferably identifies, as the time point when the brake operation is started, a time point when an absolute value of jerk obtained by differentiating the acceleration in the target period of time is maximum.

In the vehicle state determination method, in the operation start identifying step, a time point when an absolute value of jerk obtained by differentiating the acceleration is maximum is preferably identified as the time point when the brake operation is started in the target period of time.

While jerk obtained by differentiating acceleration generates a large value upon the brake operation, it generates a large value also by vibration from the road surface. Thus, according to the configuration or the method, it is possible to identify the time point when the brake operation is started with high accuracy based on the maximum value of jerk within a range in which the target period of time is appropriately narrowed down. Accordingly, identification accuracy at the time point when the brake operation has been started is further improved.

In the vehicle state determination device, the operation start identifying section preferably identifies a time point when the absolute value of jerk becomes maximum from time points when the jerk has a negative value.

In the vehicle state determination method, in the operation start identifying step, a time point when the absolute value of jerk becomes maximum is preferably identified from time points when the jerk has a negative value.

Since a negative acceleration is generated upon the brake operation, a negative jerk will at first occur. As a result, according to the configuration or the method, the time point when the brake operation is started is determined based on the fact that the negative jerk is maximum, thus influences on jerk occurring from other factors can be restrained.

In the vehicle state determination device, the determination starting instruction section preferably determines that an amount of change of acceleration estimated as the time point of terminating the brake operation is less than a predetermined value through comparison with an amount of change of acceleration when the vehicle is stopped.

According to the configuration, termination of the brake operation is determined based on comparison with the amount of change in acceleration when the vehicle is stopped. Thus, it can be determined that the vehicle has stopped in an easy and quick manner.

In the vehicle state determination device, the determination starting instruction section preferably determines that an amount of change of acceleration estimated as the time point of terminating the brake operation is less than a predetermined value through comparison with an amount of change of acceleration when the acceleration undergoes small changes after returning from a negative value to the vicinity of 0 [m/s²].

According to the configuration, regarding the amount of change in acceleration at the time when the acceleration undergoes small changes after returning from a negative value to the vicinity of 0 [m/s²], the time of terminating the brake operation is determined based on the fact that the amount of change in acceleration estimated as the time of terminating the brake operation is less than a predetermined value. Thereby, termination of the brake operation can be determined even by referring to the brake operation that does not involve stopping of a vehicle. Thus, a vehicle state with reference to the brake operation that does not involve stopping of a vehicle can also be determined.

The vehicle state determination device preferably includes a speed detecting section, which calculates a speed based on a temporal change of a position. The determination starting instruction section preferably determines that an amount of change of acceleration estimated as the time point of terminating the brake operation is less than a predetermined value based on a fact that the acceleration returns from a negative value to the vicinity of 0 [m/s²] and that the speed calculated by the speed detecting section changes from deceleration to acceleration.

According to the configuration, it is possible to perform a driving diagnosis related to the brake operation even in a case where the vehicle has not been stopped despite the brake operation. Thereby, an increase in opportunity to provide the driving diagnosis related to the brake operation with a user can be achieved. That is, an increase in applicability and usability of the vehicle-state determination device is achieved.

To achieve the foregoing objective and in accordance with one aspect of the present invention, a driving diagnosis device is provided that performs a driving diagnosis related to the brake operation based on a time point when the brake operation is terminated and a time point when the brake operation is started, which time points are respectively identified based on acceleration information, and provides a result of the diagnosis. The driving diagnosis device includes the above described vehicle state determination device as a determination device for determining a time point of starting the brake operation. The result of the driving diagnosis is provided when a speed at the time point when the brake operation is started is equal to or greater than a diagnosis speed, which is a speed as a condition of making a driving diagnosis.

According to the configuration, when the speed at the start of the brake operation is equal to or greater than a speed on performing a driving diagnosis, the result of the driving diagnosis is provided. For example, the brake operation at a low speed when the vehicle travels during traffic congestion or in an urban district may not be suitable in performing a driving diagnosis and also may cause annoyance to the driver. That is, no driving diagnosis will be performed when the vehicle travels at a low speed. Thereby, it is possible to appropriately perform a driving diagnosis. As long as the result of the driving diagnosis is not provided, any mode such as no driving diagnosis may be performed or in which the result of the thus performed driving diagnosis is not provided.

In the driving diagnosis device, the result of the driving diagnosis is preferably provided when a period of time from the time point when the brake operation is started to the time point when the start of determination is instructed is equal to or greater than a standard time necessary for attaining deceleration calculated from the speed at the time point when the brake operation is started.

Where time from the start of the brake operation to the termination thereof is extremely short in relation to the speed at the start of the brake operation, it is highly likely that the time point of starting the brake operation determined based on acceleration is determined wrongly or the time point of terminating the brake operation is determined wrongly. That is, according to the configuration, where the above-described false determination is performed, the driving diagnosis will be performed. Thereby, inappropriate driving diagnosis is prevented, and a driving diagnosis is appropriately performed.

The driving diagnosis device preferably includes a position detecting device, which calculates a speed based on changes in a current position, and a traveling detection section, which detects that the speed calculated by the position detecting device is equal to or greater than a predetermined speed. The determination starting instruction section, which is included in the determination device, preferably instructs the start of determining the operation state of the brake on the condition that the traveling detection section detects that the speed is equal to or greater than the predetermined speed.

According to the configuration, the driving diagnosis is performed on the condition that the vehicle travels at a predetermined speed or a higher speed, thereby eliminating the concern that the driving diagnosis may be performed when the vehicle does not travel or when no driving diagnosis device is installed in the vehicle. Thereby, it is possible to perform the driving diagnosis appropriately.

The driving diagnosis device preferably includes a low-speed detection section, which detects that the speed calculated by the position detecting device is less than a predetermined speed. The determination starting instruction section, which is included in the determination device, preferably instructs the start of determining the operation state of the brake on the condition that the low-speed detection section detects that the speed is less than the predetermined speed.

When a change in acceleration is lowered due to stable travel of the vehicle, there is a concern that a false determination may be performed that the brake operation has been terminated. Thus, according to the configuration, the driving diagnosis is provided on the condition that a low speed that is close to a speed at which the vehicle will stop is detected, thus making it possible to perform the driving diagnosis related to the brake operation appropriately. It is desirable that a predetermined speed for detecting a low speed is set to have a value slightly greater than a stopped speed, that is, 0. Thereby, even where detection of the speed is slightly delayed, it is possible to reduce influences upon detection of real time termination of the brake operation.

### BRIEF DESCRIPTION OF THE DRAWINGS

Fig. 1 is a diagram schematically showing the configuration of a vehicle into which a vehicle state determination device according to one embodiment is carried.
Fig. 2 is a block diagram schematically showing the configuration of the vehicle state determination device shown in Fig. 1.
Fig. 3 is a graph showing a mode of acceleration and the like measured by the vehicle state determination device shown in Fig. 2.
Fig. 4 is a time chart showing a time of determining the start of a driving diagnosis based on a determination condition at the start of performing the diagnosis by the vehicle state determination device shown in Fig. 2.
Fig. 5 is a time chart showing an example in which the start of driving diagnosis is determined based on a determination condition at the start of performing the diagnosis by the vehicle state determination device shown in Fig. 2.
Fig. 6 is a time chart showing an example in which the start of driving diagnosis is determined in an example different from the determination condition at the start of the diagnosis shown in Fig. 5.
Fig. 7 is a graph showing a mode of speed correction by the vehicle state determination device shown in Fig. 2.
Fig. 8 is a graph showing an enlarged part of the graph showing the mode of speed correction in Fig. 7.

### MODES FOR CARRYING OUT THE INVENTION

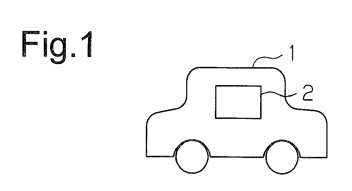

A vehicle state determination device, a vehicle state determination method, and a driving diagnosis device according to one embodiment will now be described with reference to Figs. 1 to 8.

First, a schematic description will be given of the driving diagnosis device.

As shown in Fig. 1, a vehicle 1 such as an automobile is provided with a portable information processing device 2. The portable information processing device 2 is a device that can be carried by a user and, therefore, can be carried into the vehicle 1 whenever necessary and also temporarily installed inside the vehicle. The portable information processing device 2 is a feature phone or a smartphone, and configured to include a small computer for executing and processing various types of programs. In the present embodiment, the portable information processing device 2 executes and processes programs for driving diagnosis related to the brake operation, thereby performing a driving diagnosis related to the brake operation.

The portable information processing device 2 will now be described.

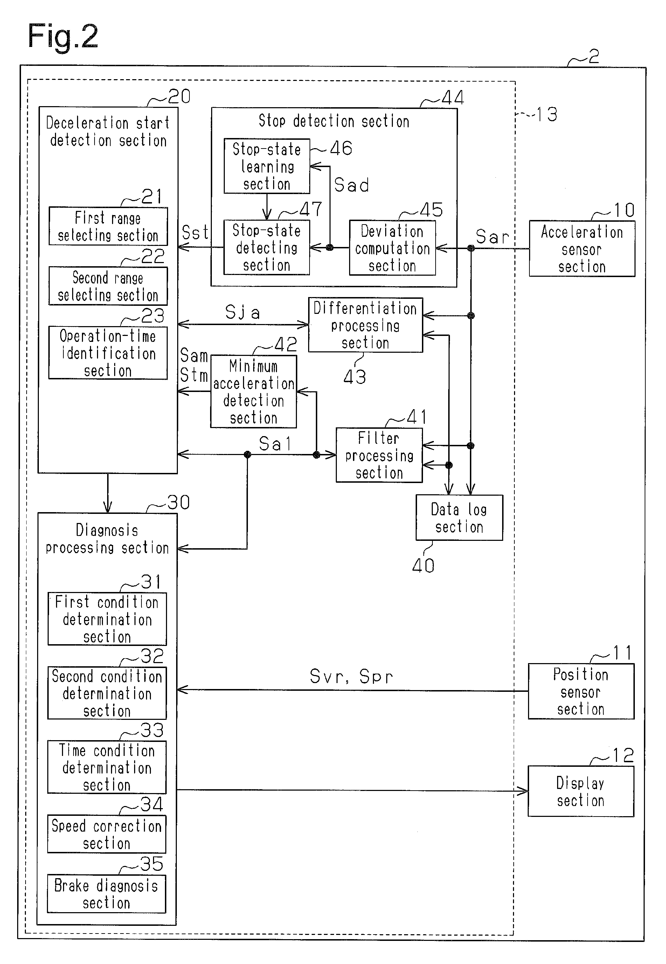

As shown in Fig. 2, the portable information processing device 2 is provided with various types of sensors, a human machine interface (HMI) and a driving diagnosis section 13 for performing a driving diagnosis. The various types of sensors include an acceleration sensor section 10 for detecting acceleration, a position detecting device for obtaining information on current position and a position sensor section 11 as a speed detecting section. The HMI is provided with output sections which output information recognizable by a user and input sections into which an instruction from a user is input. The output sections include a display section 12 which displays image information and a sound output section which is not illustrated. The input sections include an operation button and a touch sensor.

The acceleration sensor section 10 is provided with a known acceleration sensor such as a semiconductor-type three-axis acceleration sensor, thereby detecting an acceleration Sar that is applied to the portable information processing device 2. That is, where the acceleration sensor section 10 outputs a triaxial acceleration, the acceleration Sar includes the triaxial acceleration. The acceleration sensor section 10 outputs a signal corresponding to the detected acceleration Sar to the driving diagnosis section 13. Acceleration in the vertical direction and that in the horizontal direction as well as the respective orientations can be obtained from the acceleration Sar detected by the triaxial acceleration sensor by identifying the direction of gravitational acceleration. That is, the acceleration sensor section 10 is able to associate a detected direction of the acceleration Sar with an orientation such as the front face (forward) of a device. For example, the portable information processing device 2, which is arranged inside the vehicle so that the front face of the device is directed toward the driver, detects the acceleration Sar at the rear of the device when the vehicle 1 decelerates and detects the acceleration Sar at the front of the device when the vehicle 1 accelerates.

The position sensor section 11 receives a GPS signal and calculates the current position and the current time by utilizing the received GPS signal. The position sensor section 11 outputs signals corresponding to the thus calculated current position Spr and current time to the driving diagnosis section 13. Further, the position sensor section 11 calculates a speed Svr based on the relationship between positional movement and time, but the speed Svr is delayed because the calculation is performed based on the relationship between positional movement and time. For example, the interval of obtaining a GPS signal is, for example, 500 ms, calculation of the speed Svr will be delayed at least 500 ms. Further, the position sensor section 11 may calculate the current position by adding information other than the GPS signal or calculate the current position without utilizing the GPS signal. Time may also be obtained from a clock or a watch.

The driving diagnosis section 13 performs a driving diagnosis related to the brake operation. The driving diagnosis section 13 is electrically connected to the acceleration sensor section 10 and the position sensor section 11. A signal corresponding to the acceleration Sar is input to the driving diagnosis section 13 from the acceleration sensor section 10. The driving diagnosis section 13 is provided with a data log section 40 as a storage section, which stores the acceleration Sar, a filter section 41, which subjects the acceleration Sar to filter processing, and the minimum acceleration detection section 42, which detects the minimum value Sam of the acceleration Sa1 based on the filter-processed acceleration Sa1. The driving diagnosis section 13 is also provided with a differentiation processing section 43, which differentiates the acceleration Sar to calculate a jerk Sja (temporal rate of change of acceleration) and a stop detection section 44, as a determination starting instruction section for detecting the vehicle 1 has stopped from the acceleration Sar.

The data log section 40 stores the acceleration Sar, which has been input from the acceleration sensor section 10. The data log section 40 stores the thus input acceleration Sar in chronological order (sequentially). Further, the data log section 40 outputs data of the acceleration Sar corresponding to a designated period of time from the thus stored acceleration Sar.

The filter section 41 subjects the thus input acceleration Sar to filter processing to generate the leveled acceleration Sa1. The filter section 41 generates, for example, the acceleration Sa1, which is leveled as an average of measurements of the acceleration Sar in a predetermined sampling time. The above-described leveling is carried out to exclude a high frequency component that is contained in the acceleration Sar and not necessary for driving diagnosis. For example, the vehicle 1 is subjected to a large short-cycle acceleration from irregularities on a road surface. However, the acceleration is not needed for performing a driving diagnosis and, therefore, removed. Further, the thus calculated and leveled acceleration Sa1 is free of influences resulting from a temporary change in acceleration Sar, thereby appropriately reflecting a trend of change in acceleration Sar. Moreover, the filter section 41 outputs the acceleration Sa1, which has been leveled by filter processing. In order to remove a high frequency component, a high frequency removing filter may be used. In addition, leveling other than average processing may be performed.

The leveled acceleration Sa1 is input to the minimum acceleration detection section 42 from the filter section 41, and the minimum acceleration detection section 42 stores a time point Stm when the acceleration Sa1 leveled in a predetermined period of time before the current time point becomes the minimum value Sam. The minimum acceleration detection section 42 may store a plurality of minimal values and time points thereof in a predetermined period of time. Storage of the minimal values can select the minimum value. The predetermined period of time is set to be a period of time, for example, 20 seconds, but may be varied depending on a speed of the vehicle 1. The predetermined period of time may be changed to be longer, for example, at a greater speed and to be shorter at a lower speed. Moreover, the minimum acceleration detection section 42 outputs the minimum value Sam of the acceleration Sa1 and the time point Stm thereof, whenever requested.

The differentiation processing section 43 calculates the jerk Sja by differentiating the acceleration Sar and outputs the calculated jerk Sja. The differentiation processing section 43 is able to calculate the jerk Sja from the acceleration Sar input by the acceleration sensor section 10 and also able to calculate the jerk Sja with reference to the acceleration Sar stored in the data log section 40.

The stop detection section 44 detects that the vehicle 1 has stopped based on the acceleration Sar input from the acceleration sensor section 10. The stop detection section 44 is provided with a deviation computation section 45, which computes an acceleration deviation Sad occurring in the acceleration Sar, a stop-state learning section 46, which learns the acceleration deviation Sad in a state that the vehicle 1 is stopped and a stop-state detecting section 47, which detects the stop state from a current acceleration deviation Sad. Moreover, the portable information processing device 2 is able to detect that the vehicle 1 has stopped with reference to a speed Svr output from the position sensor section 11. However, the position sensor section 11 detects the speed Svr based on a positional change and, therefore, some delay occurs in detection of the stop. Thus, in the present embodiment, in order to reduce the delay in detection of the stop, the stop detection section 44 is to detect quickly that the vehicle 1 has stopped based on the acceleration Sar.

Upon input of the acceleration Sar from the acceleration sensor section 10, the deviation computation section 45 calculates the acceleration deviation Sad occurring to the thus input acceleration Sar in a predetermined period of time. The deviation computation section 45 outputs the calculated acceleration deviation Sad. In the present embodiment, the predetermined period of time is set to be one second, and the deviation computation section 45 calculates the acceleration deviation Sad from displacement in one second occurring to the acceleration Sar. That is, the acceleration deviation Sad is calculated as an amount of change of the acceleration Sar in the predetermined period of time. The predetermined period of time may be shorter or longer than one second, as long as a stop state of the vehicle 1 can be appropriately detected.

Upon input of the acceleration deviation Sad output from the deviation computation section 45, the stop-state learning section 46 learns the acceleration deviation Sad when the vehicle 1 is in a stopped state. One such example is that when the vehicle 1 is stopped, the acceleration Sar tends to undergo small changes after returning from a negative value to the vicinity of 0 [m/s²]. The stop-state learning section 46 may detect the fact that the vehicle 1 is in a stopped state by utilizing a speed Svr calculated by the position sensor section 11, request the driver to confirm that the vehicle is stopped or instruct a learning timing by the driver. The stop-state learning section 46 may learn the acceleration deviation Sad upon detection of the acceleration deviation Sad when the vehicle 1 is reliably stopped. The stop-state learning section 46 may also learn only one acceleration deviation Sad or learn a plurality of acceleration deviations Sad in a predetermined period of time.

Moreover, it is considered that the acceleration Sar occurring when the vehicle 1 stops is different depending on the types of vehicles, a state that the portable information processing device 2 is installed, types of acceleration sensors and types of portable information processing devices 2. Therefore, when the portable information processing device 2 is initially installed in the vehicle 1 as intended, it is desirable that the stop-state learning section 46 learns the acceleration deviation Sad in a stop state when the vehicle 1 is stopped. This learning is able to correct a variation in types of vehicles, types of devices and installation conditions. Thus, it is possible to improve the accuracy of determining the stop state based on the acceleration deviation Sad.

The stop-state detecting section 47 detects whether or not the vehicle 1 is stopped based on the acceleration deviation Sad at that time. The stop-state detecting section 47 determines at first whether or not the acceleration deviation Sad at that time is of such a level that the stop is determined. Moreover, upon determination that the acceleration deviation Sad at that time is of the level that the stop is determined, the stop-state detecting section 47 compares the acceleration deviation Sad at that time with the acceleration deviation Sad at the stop time, which is learned by the stop-state learning section 46. When the stop-state detecting section 47 determines that the acceleration deviation Sad at that time is smaller than the acceleration deviation Sad learned at the stop time in a predetermined time, it determines that the vehicle 1 is now stopped, thereby outputting a determination result thereof as a vehicle stopping signal Sst (determination start instruction step). That is, the stop detection section 44 detects that the vehicle 1 has stopped.

In the present embodiment, the predetermined time in which the acceleration deviation Sad at that time is compared with the acceleration deviation Sad learned at the stop time is set to be two seconds. However, as long as the stopping of the vehicle 1 can be reliably determined, the predetermined time may be shorter or longer than two seconds. Further, where a plurality of components are contained in the acceleration deviation Sad, the maximum acceleration deviation of any components contained in the acceleration deviation Sad at that time may be compared with the minimum acceleration deviation of any components contained in the acceleration deviation Sad learned at the stop time. Alternatively, an acceleration deviation of each component contained in the acceleration deviation Sad at that time may be compared with an acceleration deviation of a corresponding component contained in the acceleration deviation Sad learned at the stop time.

Further, the driving diagnosis section 13 is provided with a deceleration start detection section 20, which estimates a time point of starting the brake operation of the vehicle 1 and a diagnosis processing section 30, which performs a driving diagnosis related the brake operation.

The acceleration Sa1, which has been leveled by means of the filter section 41, is input from the acceleration sensor section 10 to the deceleration start detection section 20. The deceleration start detection section 20 estimates the time point of starting the brake operation of the vehicle 1 based on the thus input and leveled acceleration Sa1. The deceleration start detection section 20 sets, as an estimation target period of time, a predetermined period of time before a time point when the vehicle stopping signal Sst has been input based on the fact that the vehicle stopping signal Sst has been input from the stop detection section 44, thereby estimating the time point of starting the brake operation within the estimation target period of time. The deceleration start detection section 20 is provided with a first range selecting section 21 as an exclusion period-of-time selecting section which narrows down an estimated range of the time point when the brake operation has been started in the estimation target period of time and a second range selecting section 22. The first range selecting section 21 narrows down a target range in the estimation target period of time based on a magnitude of the leveled acceleration Sa1. The second range selecting section 22 narrows down a target range in the estimation target period of time based on a range of the leveled acceleration Sa1. The deceleration start detection section 20 is also provided with an operation-time identification section 23 as an operation start identifying section which identifies the time point of starting the brake operation from the estimation target period of time based on the jerk Sja of the acceleration Sar.

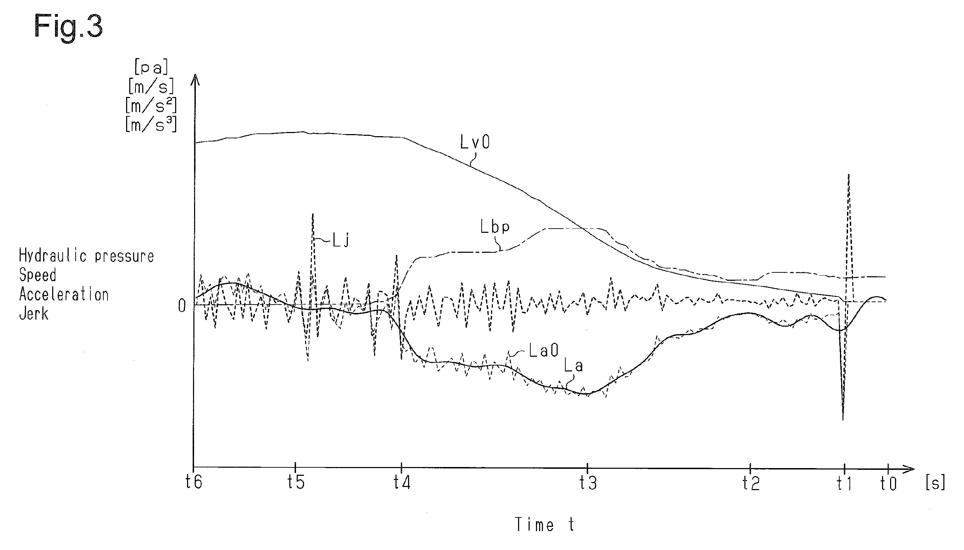

A description will be given of the first range selecting section 21, the second range selecting section 22 and the operation-time identification section 23 with reference to Fig. 3. In Fig. 3, the acceleration Sar, which is output from the acceleration sensor section 10 is indicated by a graph La0, the leveled acceleration Sa1 output from the filter section 41 is indicated by a graph La and the jerk Sja output from the differentiation processing section 43 is indicated by a graph Lj. Further, in Fig. 3, for reference, the actual speed of the vehicle 1 measured by a speed sensor and the like is indicated by a graph Lv0, and a brake hydraulic pressure, which varies by the brake operation, is indicated by a graph Lbp.

As shown in Fig. 2, the vehicle stopping signal Sst is input from the stop detection section 44 to the first range selecting section 21. Moreover, as shown in Fig. 3, upon input of the vehicle stopping signal Sst, the first range selecting section 21 identifies a time point when the vehicle stopping signal Sst has been input as a stop time point t0 and also sets a period of time from the identified stop time point t0 to a time point t6 in the past only by a predetermined period of time as an estimation target period of time. The time point t6 is the maximum value set based on a standard period of time necessary for the brake operation for which a driving diagnosis is performed. The time point t6 is set based on experimental values, empirical values or calculation values and, for example, a value of 20 seconds is set.

Further, when the estimation target period of time is set, the first range selecting section 21 obtains from the minimum acceleration detection section 42 a time point Stm in the past when the leveled acceleration Sa1 has been the minimum value Sam. The thus obtained time point Stm corresponds to the time point t3 in Fig. 3. Moreover, the first range selecting section 21 sets a range from the time point t3 to the stop time point t0 as an exclusion period-of-time. That is, a first target period of time is set as a period of time from the time point t3 to the time point t6 in which the exclusion period-of-time is excluded from the estimation target period of time which estimates a time point of starting the brake operation (exclusion period-of-time selecting step).

The second range selecting section 22 narrows down further the first target period of time set by the first range selecting section 21 based on an acceleration range. The second range selecting section 22 obtains via the filter section 41 from the data log section 40 the leveled acceleration Sa1 from the time point t3 corresponding to the first target period of time to the time point t6. Moreover, the second range selecting section 22 extracts a range that includes a range of the thus obtained leveled acceleration Sa1 in a predetermined acceleration range. In general, the brake operation by the driver is characterized in that prior to start of the brake operation, in most cases, acceleration undergoes small changes although being gradually decreased in the vicinity of 0 [m/s²]. Thus, it is preferable that a time point when the brake operation has been started is searched in a range where acceleration is in the vicinity of 0 [m/s²] or less. In the present embodiment, since the predetermined acceleration range is set to be 0 [m/s²] ≥ Sa1 ≥ -0.1 [m/s²], the second range selecting section 22 extracts a range from the time point t3 to the time point t5 as a range in which from the time point t3 to the time point t6, the acceleration Sa1 (graph La) is 0 [m/s²] ≥ Sa1 ≥ -0.1 [m/s²]. That is, the second range selecting section 22 sets a second target period of time in which the first target period of time is narrowed down to a range from the time point t3 to the time point t5.

The operation-time identification section 23 identifies a time point of starting the brake operation based on the jerk Sja from the second target period of time (from the time point t3 to the time point t5) (operation start identifying step). The operation-time identification section 23 allows the data log section 40 to output the acceleration Sar of the second target period of time to the differentiation processing section 43, thereby obtaining the jerk Sja of the second target period of time output by the differentiation processing section 43. Moreover, the operation-time identification section 23 extracts extreme values from the thus obtained jerk Sja and identifies the time point (t4) that is the minimum extreme value among the extracted extreme values as the time point t4 of starting the brake operation. In general, at the time point t4 of starting the brake operation, the jerk Sja is at first increased in a negative direction. Therefore, it is preferable that the minimum extreme value is used to identify the time point t4 of starting the brake operation. In the present embodiment, since the time point t4 of starting the brake operation is overlapped in time point with elevation of brake hydraulic pressure (graph Lbp), it is possible to correctly identify the time point t4 of starting the brake operation.

Thereby, the deceleration start detection section 20 identifies the time point t4 of starting the brake operation. Moreover, the deceleration start detection section 20 outputs to the diagnosis processing section 30 a period of time from the time point t4 of starting the brake operation to the stop time point t0 of the vehicle 1 as a diagnosis target period of time for driving diagnosis of the brake operation.

The diagnosis processing section 30 performs a driving diagnosis related to the brake operation in the diagnosis target period of time. The diagnosis processing section 30 obtains the diagnosis target period of time from the deceleration start detection section 20 and also performs a driving diagnosis related to the brake operation based on the acceleration Sa1, the speed Svr, the jerk Sja, and the like, in the diagnosis target period of time. Further, the diagnosis processing section 30 is able to retain the current position Spr, the speed Svr, and the like, which are input from the position sensor section 11 as a traveling history in a storage device, and the like, which are not illustrated.

The diagnosis processing section 30 is provided with a first condition determination section 31 as a traveling detection section that determines conditions of performing a driving diagnosis, a second condition determination section 32 and a time condition determination section 33, each of which is as a low-speed detection section, a speed correction section 34 that corrects a speed used in performing a driving diagnosis, and a brake diagnosis section 35 that performs a driving diagnosis related to the brake operation.

The brake diagnosis section 35 is a portion that performs a driving diagnosis related to the brake operation and compares changes in acceleration Sa1, speed Svr and jerk Sja in the diagnosis target period of time with an optimum model that has been set, thereby evaluating similarities thereof and expressing them in numerical terms. The similarities are evaluated and expressed in numerical terms according to a known evaluation method and a numerical expression method. Moreover, the brake diagnosis section 35 converts the numerically expressed similarities to indexes for a user and allows the display section 12 to display the converted indexes. That is, the brake diagnosis section 35 provides a user with the driving diagnosis related to the preceding the brake operation.

Even where the deceleration start detection section 20 sets the diagnosis target period of time, there is a case in which it is not appropriate to provide a user with a driving diagnosis related to the brake operation. Therefore, in the present embodiment, prior to providing the driving diagnosis, the diagnosis processing section 30 determines in advance whether or not it is appropriate to provide the driving diagnosis by means of the first condition determination section 31, the second condition determination section 32 and the time condition determination section 33.

Moreover, a description will be given of determination on whether or not the driving diagnosis is provided by the diagnosis processing section 30.

The first condition determination section 31 determines whether or not a driving diagnosis can be performed based on the speed Svr in the traveling history of the vehicle 1, which includes the diagnosis target period of time. The first condition determination section 31 sets, for example, 20 [km/h] as a first condition speed α that is a feasibility condition of performing a driving diagnosis related to the brake operation and also has a traveling determination flag for retaining a determination result. The fact that the vehicle 1 travels in the first condition speed α or greater is given as a condition, by which it is possible to prevent a concern that the driving diagnosis may be performed at a time when vehicle 1 does not travel or in a situation that a portable information processing device 2 is not installed in the vehicle 1.

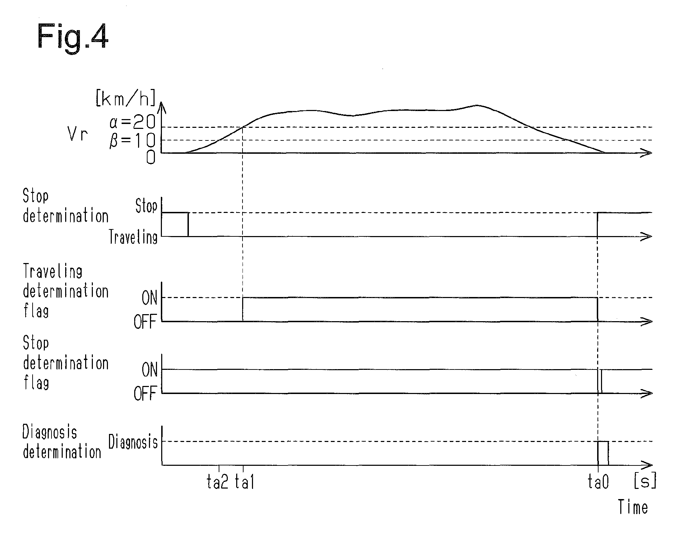

As shown in Fig. 4, the first condition determination section 31 sets the traveling determination flag to be OFF "0" (before time ta2) after the previous driving diagnosis has been performed and, thereafter, sets the traveling determination flag to be ON "1" when the speed Svr becomes equal to or more than 20 [km/h] (time ta1). Moreover, the first condition determination section 31 determines that the driving diagnosis can be performed where the traveling determination flag is "1" upon detection of the diagnosis target period of time (time ta0). Moreover, in the present embodiment, when a determination is performed that the driving diagnosis can be performed, the diagnosis processing section 30 then determines a condition by the second condition determination section 32. Further, upon detection that the driving diagnosis has been performed, the first condition determination section 31 sets the traveling determination flag to be OFF "0". It is desirable that the traveling determination flag is set to be OFF when the acceleration deviation Sad is learned by the stop-state learning section 46 or when the driving diagnosis related to the brake operation is discontinued or terminated.

Moreover, the first condition speed α is set so that a driving diagnosis is performed adaptable to the sensation of the driver. For example, when a driving diagnosis is performed for driving only when a vehicle travels at a low speed, the driving diagnosis is performed frequently during traffic congestion when the driver feels that it is not necessary to perform the driving diagnosis, and there is a concern that the driver may feel annoyance. Further, the driving diagnosis is not applicable to the brake operation at a low speed such as during traffic congestion or on traveling in an urban district. Therefore, where the speed Svr included in a traveling history is exclusively equal to or less than the first condition speed α, it is preferred that no driving diagnosis is performed. Where the speed Svr included in the traveling history is less than the first condition speed, the first condition determination section 31 determines that driving diagnosis is not performed, by which the diagnosis processing section 30 will not perform a driving diagnosis related to the brake operation in the diagnosis target period of time.

The second condition determination section 32 determines whether or not a driving diagnosis can be performed based on the speed Svr in a traveling history of the vehicle 1, which includes the diagnosis target period of time. The second condition determination section 32 sets a second condition speed β at which no driving diagnosis is allowed and which is, for example, 10 [km/h].

As shown in Fig. 4, the second condition determination section 32 sets a stop determination flag to be OFF "0" (before time point ta2) after the previous driving diagnosis has been performed and, thereafter, sets the stop determination flag to ON "1" when the speed becomes equal to or less than 10 [km/h] (before time ta2). Next, where the stop determination flag is "1" upon detection of the diagnosis target period of time (time ta0), the second condition determination section 32 determines that a driving diagnosis can be performed. Moreover, when it is determined the driving diagnosis can be performed, in the present embodiment, the diagnosis processing section 30 determines a condition by the time condition determination section 33. On the other hand, where the stop determination flag is "0" upon detection of the diagnosis target period of time, the second condition determination section 32 determines that no driving diagnosis can be performed, by which the diagnosis processing section 30 will not perform the driving diagnosis related to the brake operation in the diagnosis target period of time.

After it has been determined that the driving diagnosis can be performed, the second condition determination section 32 detects that the driving diagnosis has been performed and sets the stop determination flag to be OFF "0". In most cases, after the driving diagnosis has been performed, the vehicle 1 is stopped. Therefore, the stop determination flag is immediately set to be ON.

A description will be given of effects when the traveling determination flag and the stop determination flag are used.

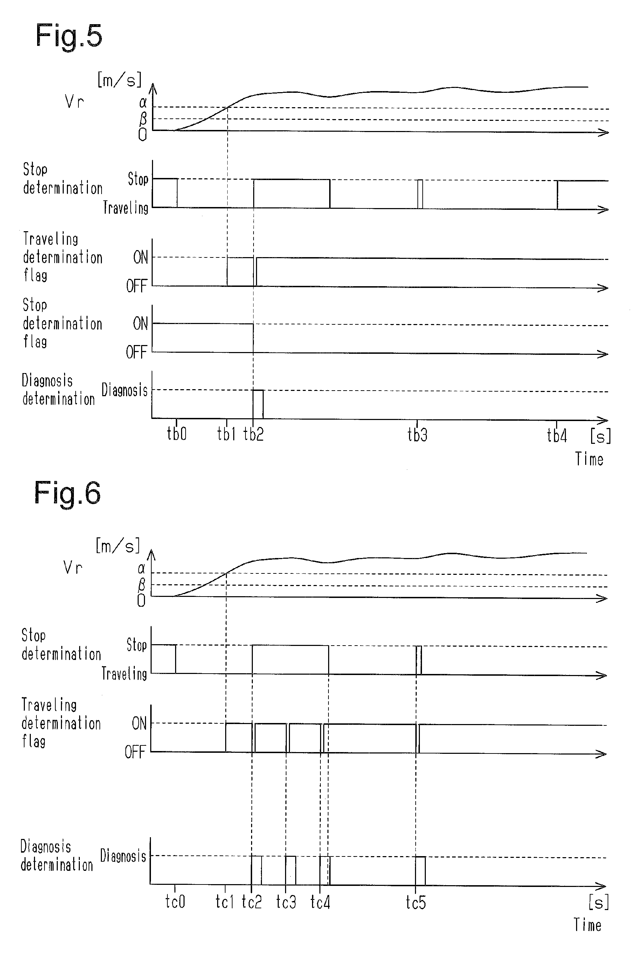

As shown in Fig. 5, since acceleration undergoes small changes when the vehicle 1 becomes stable in speed Vr, there is a case in which the stop detection section 44 may perform false determination of the stopping of the vehicle 1 (time point tb2). At this time, the traveling determination flag subsequent to the time point tb1 is ON due to traveling of the vehicle and the stop determination flag is kept ON before the time point tb0, thus resulting in a temporary driving diagnosis (time point tb2). Accordingly, the traveling determination flag and the stop determination flag are both set to be OFF. Thereafter, the traveling determination flag is immediately set to be ON but the stop determination flag is kept OFF thereafter. Thus, subsequent to the time point tb2, for example, at the time point tb3 and the time point tb4 in which the diagnosis target period of time has been notified, the driving diagnosis is determined not to be performed by the second condition determination section 32 and, therefore, driving diagnosis is not performed.

As shown in Fig. 6, where the stop determination flag is not used, the stop detection section 44 performs false determination of the stopping of the vehicle 1, by which a driving diagnosis is performed (time tc2). At this time, the traveling determination flag is immediately set to be OFF and thereafter set to be ON. Thereafter, when the stop detection section 44 performs false determination of the stopping of the vehicle 1, the driving diagnosis is performed again (time tc3). Thereafter, every time the stop detection section 44 wrongly determines the stopping of the vehicle 1, for example, at the time point tc4 and the time point tc5, the driving diagnosis is performed. And, there is a concern that the driving diagnosis related to the brake operation is performed while the vehicle 1 is traveling and a user may become suspicious of the driving diagnosis.

However, as described above, the traveling determination flag and the stop determination flag, each of which can be set by using a simple condition based on the speed Svr, can be used to perform a driving diagnosis or provide the driving diagnosis on appropriate conditions. It is, thereby, possible to improve the convenience of the driving diagnosis.

As shown in Fig. 2, the time condition determination section 33 determines whether or not the diagnosis target period of time is appropriate in length as the time necessary for the brake operation. Where appropriate, the time condition determination section 33 determines that the driving diagnosis can be performed. And where not appropriate, the time condition determination section 33 determines that the driving diagnosis cannot be performed. The time condition determination section 33 has the maximum deceleration acceleration which is permitted in an ordinary brake operation, that is, -0.4 [G] (G=9.8 m/s²) as the minimum acceleration. Moreover, the time condition determination section 33 obtains the speed Svr of the vehicle 1 at the time point t4 of starting the brake operation (refer to Fig. 3) and also calculates time when the thus obtained speed Svr becomes "0" due to deceleration by the maximum acceleration of deceleration absolute value, as deceleration time. Moreover, where the diagnosis target period of time is shorter in length than the time necessary for the brake operation, the time condition determination section 33 determines that driving diagnosis is not performed. A case where the time is shorter than the diagnosis target period of time may include sudden braking at emergency or false detection of the diagnosis target period of time due to sensor errors. Therefore, a driving diagnosis performed in an inappropriate case is restrained, thus making it possible to lower the concern that the driver may have a sense of discomfort due to the driving diagnosis related to the brake operation.

A deceleration time Td is calculated to be about 1.41 [seconds], for example, from a first condition speed 20 [km/h] and the maximum deceleration acceleration -0.4 [G]. That is, since the deceleration time is given as Td = (20/3.6)/(0.4 x 9.8) ≈ 1.41, 1.41 [seconds] or a close value, 1.5 [seconds] may be set as the deceleration time. In the present embodiment, the diagnosis processing section 30 will not perform a driving diagnosis when the speed Svr of the vehicle 1 is equal to or less than the first condition speed 20 [km/h]. Thus, 1.41 [seconds] or 1.5 [seconds] is applicable as a deceleration time to the speed Svr of 20 [km/h], which is a larger value. Further, the maximum deceleration acceleration may be greater than -0.4 [G] or smaller than -0.4 [G] within a range of the acceleration that can be generated on normal driving by the driver. The deceleration time may also be calculated whenever necessary based on the speed Svr of the vehicle 1 at a time point of starting the brake operation.

The speed correction section 34 corrects a differentiation speed calculated based on the acceleration sensor section 10 by using correctness of the speed Svr detected by the position sensor section 11. An accurate speed is needed quickly when the driving diagnosis related to the brake operation is performed. Although the speed Svr output from the position sensor section 11 is accurate, temporal delay will inevitably occur. On the other hand, the leveled acceleration Sa1 or the acceleration Sar of the acceleration sensor section 10 can be integrated from the stop time point t0 of the vehicle 1 to quickly calculate an integral speed. However, the integral speed undergoes accumulation of integration errors that are not negligible with the lapse of time from the stop time point t0. Thus, the speed correction section 34 corrects an integral speed Va0 at the start of the brake operation based on a speed Vr0 of the vehicle 1 at the time point td1 of starting the brake operation that has been already output by the position sensor section 11, thereby quickly obtaining an accurate speed.

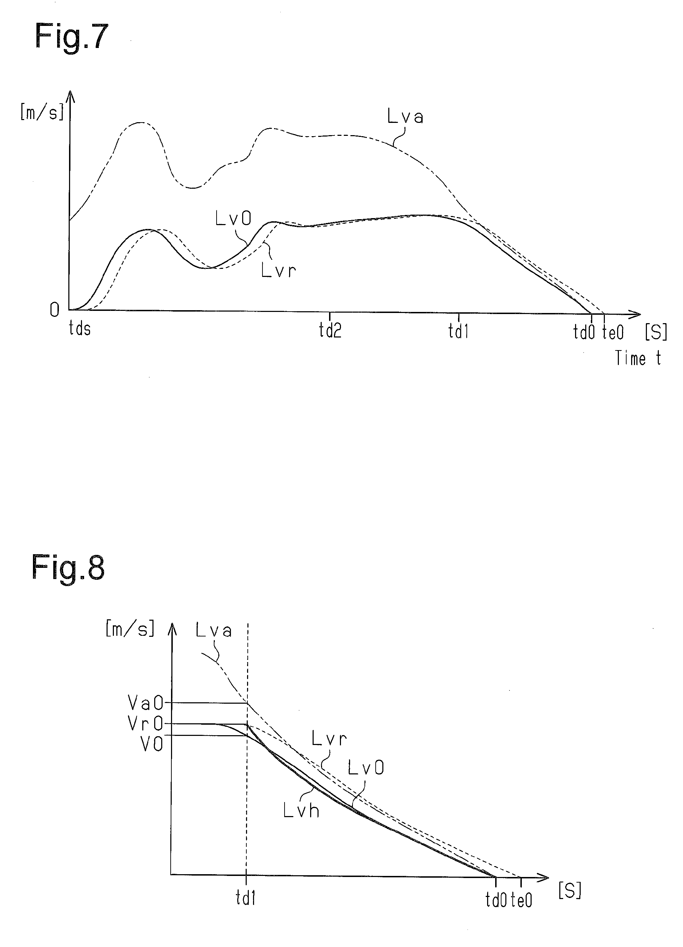

As shown in Fig. 7, where the actual speed of the vehicle 1 changes as indicated by the graph Lv0, the speed Svr calculated by the position sensor section 11 changes as indicated by the graph Lvr. That is, the speed Svr is calculated based on a position Spr of the vehicle 1 and, therefore, the speed Svr is accurate. However, calculation means an inevitable delay. For example, stop based on the speed Svr is determined at the time point te0, which is later than an actual stop time point td0. Further, the integral speed varies as indicated by the graph Lva. That is, at the stop time point td0 when the vehicle 1 has stopped is detected, no integration errors are found. However, accumulation of integration errors will occur inevitably, with the lapse of time from the stop time point td0.

As shown in Fig. 8, the integration error of the integral speed decreases the detected step time point td0, at which the vehicle 1 has stopped, and increases as the time difference from the time point td0 increases (into the past). For example, the integral speed Va0 at the time of starting the brake operation is assumed to be detected at the time point td1 of starting the brake operation. The time point td1 of starting the brake operation is in close proximity immediately after stable traveling of the vehicle 1 and, therefore, the speed Vr0 calculated by the position sensor section 11 is close to an actual speed V0 of the vehicle 1. Thus, the following calculation is performed for the speed from the time point td1 of starting the brake operation necessary for a driving diagnosis related to the brake operation to the stop time point td0 of the vehicle 1.

First, the speed correction section 34 obtains the speed Vr0 calculated by the position sensor section 11 at the time point td1 of starting the brake operation and also calculates the integral speed Va0 at the start of the brake operation. Moreover, the speed correction section 34 calculates a correction factor of the integral speed Va0 at the time of starting the brake operation using the expression (the speed Vr0 calculated by the position sensor section 11)/(the integral speed Va0 at the start of the brake operation). If the integral speed calculated from acceleration is given as Va[t] and [t] is given as a range from the time point td1 of starting the brake operation to the stop time point td0 of the vehicle 1, the speed correction section 34 is able to obtain a corrected vehicle speed V[t] by the expression: the vehicle speed V[t] = Va [t] x (Vr0/Va0). The thus corrected vehicle speed V[t] is indicated by the graph Lvh which is a value close to the actual speed of the vehicle 1 indicated by the graph LvO. That is, the integral speed is corrected based on a relationship between "the integral speed Va0 at the start of the brake operation" and "the speed Vr0 calculated by the position sensor section 11" at the time point td1 of starting the brake operation, thereby quickly obtaining an accurate speed of the vehicle 1. As described so far, the accurate speed can be quickly obtained, thus making it possible to perform a quick driving diagnosis and also improve the convenience of a user.

As described above, the vehicle state determination device, the vehicle state determination method, and the driving operation diagnosis device according to the present embodiment achieve the following advantages.
(1) It is possible to appropriately exclude a period of time in which no brake operation is started, upon determination of the time point when the brake operation has been started with reference to a change in acceleration Sar obtained from the acceleration sensor section 10. The period of time which is unrelated to the start of the brake operation is excluded to restrain a false detection at the time point t4 of starting the brake operation, thus making it possible to determine reliably a vehicle state based on the acceleration Sar detected by the acceleration sensor. Further, information processing for detecting the time point t4 of starting the brake operation can be reduced to quickly determine the vehicle state. Still further, in the above-described determination mode, even if the acceleration sensor is a sensor installed in the portable information processing device 2, it is possible to accurately determine an operation state of the braking based on the thus obtained acceleration Sar.
(2) Since a period of time to the time point t3 when the acceleration Sar becomes minimum can be easily identified, it is possible to reduce computation load and the like, on calculation of the exclusion period-of-time. That is, it is possible to reduce additional processing load and improve responsiveness.
(3) The brake operation by the driver is characterized in that prior to start of the brake operation, in most cases, acceleration undergoes small changes in speed although being gradually decreased in the vicinity of 0 [m/s²]. Thus, the time point when the brake operation has been started is searched in a range where acceleration is equal to or less than 0 [m/s²]. Thereby, a range of search at the time point of starting the brake operation can be reliably narrowed down. It is, thus, expected to improve the detection accuracy and realize quick computation processing.
(4) The vehicle 1 is inevitably subjected to a certain variation in measurements of the acceleration Sar. Therefore, an average of measurements of acceleration obtained in a predetermined sampling time is utilized to appropriately reflect a trend of change in acceleration. The time point when the brake operation has been started can be searched, for example, in a range where an average of acceleration from which influences of temporary change in acceleration have been eliminated is equal to or less than 0 [m/s²]. Thereby, it is possible to lower a risk that determination of the time point of starting the brake operation may be influenced by the temporary change in acceleration.
(5) The brake operation by the driver will cause a large acceleration. Therefore, the second target period of time is defined as a range in which the leveled acceleration Sa1 is equal to or greater than -1.0 [m/s²] (-0.1 ≤ Sa1), by which the target period of time is narrowed down to a deceleration acceleration range, the magnitude (absolute value) of which is smaller than the acceleration Sar occurring on the brake operation. Accordingly, the target period of time is narrowed down further and determination of the time point of starting the brake operation can be further improved.
(6) The time point when an absolute value of jerk Sja becomes maximal is identified as the time point of starting the brake operation. The jerk Sja obtained by differentiating the acceleration Sar generates a large value on the brake operation and also generates a large value on vibration from a road surface. Thus, the target period of time is based on the maximum value of the jerk Sja in an appropriate narrowed-down range, thus making it possible to identify the time point of starting the brake operation with high accuracy. Thereby, identification accuracy of the time point of starting the brake operation is further improved.
(7) Since a negative acceleration Sar occurs on the brake operation, a negative jerk Sja will develop at first. As a result, based on the fact that the negative jerk Sja is maximum, the time point when the brake operation has been started can be determined to suppress influences on the jerk Sja generated from other factors.
(8) Termination of the brake operation is determined by comparing amount of changes of the acceleration Sar at the stopping of a vehicle, thus making it possible to determine quickly and easily the stopping of the vehicle.
(9) It is possible to determine the time of terminating the brake operation based on the amount of change of the acceleration Sar (acceleration deviation Sad) when the acceleration Sar undergoes small changes after returning from a negative value to the vicinity of 0 [m/s²]. The time of terminating the brake operation is determined based on the fact that the amount of change of the acceleration Sar (acceleration deviation Sad) when estimated as the time of terminating the brake operation is less than a predetermined value of the learned acceleration deviation Sad, and the like. Accordingly, even on a brake operation that will not stop the vehicle 1, termination of the brake operation can be determined. And, as described so far, it is also possible to determine a state of the vehicle on a brake operation that does not involve stopping of the vehicle 1.
(10) When the speed Svr at the start of the brake operation is less than the first condition speed α at which a driving diagnosis is performed, no result of driving diagnosis is provided, that is, when the speed is equal to or greater than the first condition speed α, the result of driving diagnosis is provided. A driving diagnosis may not be suitable for the brake operation performed at a low speed, for example, during traffic congestion or on traveling in an urban district, and there is also a concern that the driver may feel annoyance. That is, no driving diagnosis is performed for the above-described the brake operation at a low speed. Thereby, it is possible to appropriately perform a driving diagnosis. As long as the results of the driving diagnosis are not provided, any mode such as no driving diagnosis is performed or in which the results of the thus performed driving diagnosis are not provided.
(11) Where time from the start of the brake operation to termination of the brake operation is extremely short in relation to the speed Svr at the time point of starting the brake operation, it is highly likely that the time point of starting the brake operation determined based on the acceleration Sar or the time point of terminating the brake operation is wrongly determined. That is, no driving diagnosis can be provided in such a case in which the wrong determination is performed. It is, thereby, possible to prevent an inappropriate driving diagnosis from being provided and perform a driving diagnosis appropriately.
(12) The first condition determination section 31 instructs the start of determining a state of the brake operation on the condition that the speed becomes equal to or greater than the first condition speed α. That is, when a driving diagnosis is performed, such a condition that the vehicle 1 has traveled at the first condition speed α or more is set. Accordingly, a concern that the driving diagnosis may be performed in a situation that the vehicle 1 does not travel or in an environment that no portable information processing device 2 is installed in the vehicle 1 from the beginning is excluded. It is, thereby, possible to appropriately provide the driving diagnosis.
(13) When stable traveling of the vehicle 1 reduces a change in acceleration, there is a concern that termination of the brake operation may be wrongly determined. Thus, the second condition determination section 32 provides the driving diagnosis on the condition that there has been detected a low speed (second condition speed β) close to a speed at which the vehicle will stop. It is, thus, possible to appropriately provide the driving diagnosis related to the brake operation. It is desirable that a stop speed, that is, a value slightly greater than "0" is set for a predetermined speed to detect a low speed. Thereby, even if a certain delay is found in detection of the speed, influences on detection of real time termination of the brake operation can be eliminated.

### Other Embodiments

The above described embodiment may be modified as follows.

The above-described embodiment illustrates the filter section 41 in a case in which the acceleration Sar input from the acceleration sensor section 10 is subjected to filter processing and output as the leveled acceleration Sa1. The filter section can be set in various ways to obtain the acceleration Sa1, which is leveled to be suitable for driving diagnosis related to the brake operation, depending on content of the filter processing. For example, the filter section may be performed in a state that it will not function as a filter so that no filter section would be provided, that is, in a state that no difference is found between acceleration that has been input and acceleration that has been output. It is, thereby, possible to improve the flexibility of designing the vehicle state determination device and the driving diagnosis device.

The above-described embodiment illustrates the stop detection section 44 in a case in which the stopping of a vehicle is detected based on the acceleration deviation Sad occurring to the acceleration Sar in a predetermined period of time. However, in addition thereto, the stop detection section may detect the stopping of the vehicle by other methods, as long as it is able to detect the stop thereof. For example, the stop detection section learns a mode of change in acceleration of the stopped vehicle and determines that the vehicle is stopped when a mode of change in the thus learned acceleration is similar to a mode of change in acceleration at that time. The stop detection section may learn a range of variation in acceleration of the stopped vehicle and determine that the vehicle is stopped when a range of variation in acceleration at that time is included in a range of variation in the thus learned acceleration. Thereby, it is possible to improve the flexibility of designing the vehicle state determination device.

The above-described embodiment illustrates the exclusion period-of-time in a case in which a range from the stop time point t0 when the vehicle 1 is stopped is identified to the time point t3 when the acceleration is minimum is set as the exclusion period-of-time. However, in addition thereto, the exclusion period-of-time may be set in a range in which the amount of change of acceleration tends to be negative from the time point when the vehicle 1 is stopped is identified to the past. For example, in Fig. 3, only a part in which the amount of change of acceleration is negative in a range from the stop time point t0 to the time point t3 may be set as the exclusion period-of-time, or that a period of time in which the amount of change of acceleration subjected to leveling processing such as average processing is negative in a range from the stop time point t0 to the time point t3 may be set as the exclusion period-of-time. Predetermined processing is executed, thus making it possible to reduce influences of change in a positive direction toward the past that occurs to acceleration temporarily and set the exclusion period-of-time in a range where the amount of change of acceleration tends to undergo a negative change. It is, thereby, possible to improve the flexibility of designing the vehicle state determination device.

In the above-described embodiment, a predetermined acceleration range of the second range selecting section 22 is represented by the expression: 0 [m/s²] ≥ Sa1 ≥-0.1 [m/s²]. However, in addition thereto, if candidates of the estimation target period of time can be narrowed down appropriately, the predetermined acceleration range is not restricted thereto. For example, the predetermined acceleration range may be represented by the expression: (0 + δ1) [m/s²] ≥ Sa1 ≥ 0.1 [m/s²]. Each of δ1 and δ2 indicates an error range and may be a value corresponding to 10% of 0.1 [m/s²]. It is, thereby, possible to improve the flexibility of designing the vehicle state determination device.

In the above-described embodiment, in the second range selecting section 22, the first target period of time is narrowed down to the second target period of time in which the acceleration Sa1 satisfies the expression 0 [m/s²] ≥ Sa1 ≥ -0.1 [m/s²]. However, in addition thereto, the second range selecting section is not for setting the second target period of time but may provide to the operation-time identification section a time point and a zone included in acceleration of 0 [m/s²] or less and -0.1 [m/s²] or more in the first target period of time as ranges which are used in identifying the time point of starting the brake operation. It is, thereby, possible that on the condition that the acceleration is 0 [m/s²] or less and -0.1 [m/s²] or more, the operation-time identification section identifies the time point of starting the brake operation based on the jerk Sja. For example, where the condition that the acceleration is 0 [m/s²] or less and -0.1 [m/s²] or more continues from the time point t3 to the time point t5, a range used in identification is to be from the time point t3 to the time point t5. On the other hand, where the condition that the acceleration is 0 [m/s²] or less and -0.1 [m/s²] or more is discontinuous from the time point t3 to the time point t6, a plurality of ranges used in identification are set between the time point t3 and the time point t6. Unlike the above-described embodiment in which the second range selecting section is used to identify the second target period of time, in an attempt that the operation-time identification section identifies the time point of starting the brake operation based on the jerk Sja when the acceleration is included in a range of 0 [m/s²] or less and -0.1 [m/s²] or more, it is also possible to narrow down the range used in identification. It is, thereby, possible to improve the flexibility of designing the vehicle state determination device.

The above-described embodiment illustrates the operation-time identification section 23 in a case in which the time point t4 of starting the brake operation is identified based on the minimum extreme value of jerk. However, in addition thereto, the operation-time identification section may identify the time point of starting the brake operation based on the maximum extreme value of jerk or may identify it based on the maximum extreme value of absolute values of jerk. It is, thereby, possible to improve the flexibility of designing the vehicle state determination device.

In the above-described embodiment, the driving diagnosis related to the brake operation is started based on the stopping of the vehicle 1. However, in addition thereto, the driving diagnosis related to the brake operation may be started from the time point of terminating the brake operation. That is, the driving diagnosis of the brake operation may be started if the brake operation is started to slow down the vehicle and thereafter the brake operation is terminated, even where the vehicle is not stopped. Termination of the brake operation may be detected, for example, based on the fact that a negative acceleration is increased in a positive direction and, thereafter, performed stable in the vicinity of "0", where the brake that has been stepped on is only released. Termination of the brake operation may be detected, for example, based on the fact that a vehicle speed is changed from deceleration to acceleration (increase) at the time when a negative acceleration is increased in a positive direction and kept in the vicinity of "0", where the accelerator pedal is stepped on from the brake pedal. At this time, it is possible to determine a change in vehicle speed from deceleration to acceleration with reference to the minimal point in association with a change in speed output from the position sensor section. That is, even when the vehicle is not stopped despite performance of the brake operation, it is possible to perform a driving diagnosis related to the brake operation. It is, thereby, possible to increase opportunities of providing a user with the driving diagnosis related to the brake operation. That is, it is possible to expand the range of applying the vehicle state determination device.

In the above-described embodiment, after detection of the diagnosis target period of time, the first condition determination section 31 is used to determine whether or not the driving diagnosis can be performed. However, in addition thereto, after the first condition determination section is used to determine whether or not the driving diagnosis can be performed, the diagnosis target period of time may be detected only when the driving diagnosis can be performed.

Since processing load for detecting the diagnosis target period of time is high, prior to detection of the diagnosis target period of time, the first condition determination section 31 may be used to determine whether or not the speed of the vehicle 1 is equal to or greater than a speed of the driving diagnosis condition. Thereby, it is expected to reduce processing load necessary for driving diagnosis and also quickly process the driving diagnosis when needed.

The above-described embodiment illustrates the diagnosis processing section 30 in a case in which the first condition determination section 31, the second condition determination section 32 and the time condition determination section 33 are used to determine whether or not the driving diagnosis can be provided. However, in addition thereto, the diagnosis processing section may perform another determination. For example, a determination may be performed for whether or not data content such as acceleration in a predetermined period of time of 20 seconds, for example, from the time point t0, when the vehicle is stopped, toward the past (up to the time point t6) are correct. For example, the diagnosis processing section may determine whether or not data (traveling history) of the position Spr and the speed Svr obtained from the position sensor section 11, and the like, are correct for 19 seconds before one second before diagnosis (that is, 20 seconds before the diagnosis is performed). Incorrect data can be determined, for example, from the fact that all the data is blank.

In a similar manner, upon input of a vehicle stopping signal Sst, the deceleration start detection section may determine whether or not data of the acceleration Sar stored in the data log section 40 is correct or not for 19 seconds before one second before diagnosis which is a time point when the vehicle stopping signal Sst has been input (that is, 20 seconds before the diagnosis is performed).

In any case, prior to performance of various types of processing, a determination is performed for whether or not the data is correct. Where the data is not correct, that is, where driving assistance for the brake operation is not appropriately provided, the portable information processing device can be reduced in processing load. It is, thereby, possible to improve the convenience of the vehicle state determination device.

The above-described embodiment illustrates the first condition determination section 31 in a case in which the speed Svr is compared with the first condition speed α to determine whether or not a driving diagnosis can be performed. However, in addition thereto, the first condition determination section may take into account the fact that the integral speed is greater than the first condition speed as a condition of performing a driving diagnosis or may take into account only the fact that the integral speed is greater than the first condition speed as a condition of performing a driving diagnosis. It is, thereby, possible to improve the flexibility of designing the vehicle state determination device.

In the above-described embodiment, the first condition determination section 31, the second condition determination section 32 and the time condition determination section 33 determine a condition of performing a driving diagnosis. However, in addition thereto, upon determination of performing a driving diagnosis, at least one of the first condition determination section, the second condition determination section, and the time condition determination section does not necessarily need be used or all of them do not necessarily need be used. For example, if the stopping of the vehicle that is detected based on acceleration by the deceleration start detection section and the like is determined at a practical level although a condition of performing a driving diagnosis becomes loose, the driving diagnosis related to the brake operation may be performed based on the determination of the stop. It is, thereby, possible to improve the flexibility of designing the vehicle state determination device and also expand an application range.

In the above-described embodiment, the speed correction section 34 is used to correct a speed obtained by integral acceleration. However, in addition thereto, if no influences are given to a driving diagnosis, it is not necessary to correct the speed obtained by integral acceleration. Moreover, if a detected speed can be obtained earlier, a speed obtained from a position sensor may be used. For example, a difference in the speed obtained by integral acceleration is increased at a greater extent from a time point when the stop has been detected, and a shorter time up to the time point of starting the brake operation results in a smaller difference. Therefore, the speed obtained by integral acceleration may be used in performing a driving diagnosis. It is, thereby, possible to improve the flexibility of designing the vehicle state determination device.

In the above-described embodiment, functions of the driving diagnosis section 13 are set by being divided into the stop detection section 44, the deceleration start detection section 20 and the diagnosis processing section 30. However, in addition thereto, the functions of the driving diagnosis section may be set by being divided in any manner and similar functions are used in common. It is, thereby, possible to improve the flexibility of designing the driving diagnosis device.

In the above-described embodiment, the driving diagnosis section 13 exhibits its functions mainly by software processing. However, in addition thereto, some of the functions may include hardware processing. It is, thereby, possible to improve the flexibility of designing the driving diagnosis device.

In the above-described embodiment, the driving diagnosis related to the brake operation is performed by the portable information processing device 2. However, in addition thereto, the driving diagnosis related to the brake operation may be performed by a navigation device or an ECU installed in the vehicle 1. Where devices such as the navigation device installed in the vehicle 1 are connected to an on-vehicle network, and the like, to which vehicle information is sent, thereby obtaining necessary information via the on-vehicle network, and the like, it is necessary to take into account trouble with connection thereto and security. However, where the driving diagnosis is performed by using only sensors installed in the vehicle, problems on connection to the on-vehicle network, and the like, will be eliminated and the flexibility is improved on installation of the sensors. It is, thereby, possible to improve applicability in the driving diagnosis device.

In the above-described embodiment, the portable information processing device 2 is unable to obtain information from the vehicle 1. However, in addition thereto, any portable information processing device is acceptable, as long as it performs a driving diagnosis related to the brake operation based on acceleration from the acceleration sensor installed in the device. The device may be connected to a vehicle via cable or radio communications to obtain other vehicle information from the vehicle. It is, thereby, possible to expand an application range of the driving diagnosis device.

In the above-described embodiment, the portable information processing device 2 is a feature phone or a smartphone. However, in addition thereto, any portable information processing devices including tablet-type, laptop-type and desktop-type computers are acceptable, as long as they can be carried into a vehicle and installed therein. An inspection device and a measurement device are also acceptable. It is, thereby, possible to improve the flexibility in the configuration of the driving assistance device.

In the above-described embodiment, the driving diagnosis is performed for the brake operation of the vehicle 1 such as an automobile. However, in addition thereto, the driving diagnosis related to the brake operation is also applicable to any vehicle that needs the brake operation other than automobiles, for example, trains. It is, thereby, possible to expand an application range of the vehicle state determination device.

### DESCRIPTION OF THE REFERENCE NUMERALS

1...Vehicle, 2...Information processing device, 10...Acceleration sensor section, 11... Position sensor section, 12... Display section, 13... Driving diagnosis section, 20... Deceleration start detection section, 21... First range selecting section, 22... Second range selecting section, 23...Operation-time identification section, 30... Diagnosis processing section, 31... First condition determination section, 32...Second condition determination section, 33...Time condition determination section, 34...Speed correction section, 35...Brake diagnosis section, 40... Data log section, 41... Filter section, 42... Minimum acceleration detection section, 43... Differentiation processing section, 44...Stop detection section, 45...Deviation computation section, 46...Stop-state learning section, 47... Stop-state detecting section, β... Second condition speed, α... First condition speed, Sa1...Acceleration, Sad...Acceleration deviation, Sam...Minimum value, Sar...Acceleration, Sja...Jerk, Spr...Position, Sst...Vehicle stopping signal.

## Claims

1. A vehicle state determination device that determines an operation state of a brake of a vehicle based on information obtained from an acceleration sensor, the vehicle state determination device, comprising:
a storage section, which chronologically stores acceleration obtained from the acceleration sensor;
a determination starting instruction section, which instructs the start of determining the operation state of the brake based on a time point of terminating the brake operation, the time point being estimated based on a fact that an amount of change of the obtained acceleration is less than a predetermined value;
an exclusion period-of-time selecting section, which refers to the acceleration stored in the storage section from a time point when the determination starting instruction section instructs the start of determination toward the past, thereby selecting, as an exclusion period-of-time, a period of time in which the referenced acceleration decreases toward the past; and
an operation start identifying section which, for a target period of time, which is before the selected exclusion period-of-time, identifies a time point when the brake operation is started based on changes in acceleration in the target period of time.

2. The vehicle state determination device according to claim 1, wherein the exclusion period-of-time selecting section selects a period of time from the time point when the start of determination is instructed to a time point in the past when the acceleration becomes minimum as a period of time in which the referenced acceleration decreases toward the past.

3. The vehicle state determination device according to claim 1 or 2, wherein, on the condition that the acceleration is equal to or less than 0 [m/s²], the operation start identifying section identifies the time point when the brake operation is started from the target period of time.

4. The vehicle state determination device according to claim 3, wherein the acceleration within the target period of time is an average of acceleration in a predetermined sampling period of time.

5. The vehicle state determination device according to claim 3 or 4, wherein the operation start identifying section identifies the time point when the brake operation is started from the target period of time on the condition that the acceleration is equal to or greater than -1.0 [m/s²].

6. The vehicle state determination device according to any one of claims 1 to 5, wherein the operation start identifying section identifies, as the time point when the brake operation is started, a time point when an absolute value of jerk obtained by differentiating the acceleration in the target period of time is maximum.

7. The vehicle state determination device according to claim 6, wherein the operation start identifying section identifies a time point when the absolute value of jerk becomes maximum from time points when the jerk has a negative value.

8. The vehicle state determination device according to any one of claims 1 to 7, wherein the determination starting instruction section determines that an amount of change of acceleration estimated as the time point of terminating the brake operation is less than a predetermined value through comparison with an amount of change of acceleration when the vehicle is stopped.

9. The vehicle state determination device according to any one of claims 1 to 7, wherein the determination starting instruction section determines that an amount of change of acceleration estimated as the time point of terminating the brake operation is less than a predetermined value through comparison with an amount of change of acceleration when the acceleration undergoes small changes after returning from a negative value to the vicinity of 0 [m/s²].

10. The vehicle state determination device according to any one of claims 1 to 7, further comprising a speed detecting section, which calculates a speed based on a temporal change of a position,
wherein the determination starting instruction section determines that an amount of change of acceleration estimated as the time point of terminating the brake operation is less than a predetermined value based on a fact that the acceleration returns from a negative value to the vicinity of 0 [m/s²] and that the speed calculated by the speed detecting section changes from deceleration to acceleration.

11. A driving diagnosis device, which performs a driving diagnosis related to the brake operation based on a time point when the brake operation is terminated and a time point when the brake operation is started, which time points are respectively identified based on acceleration information, and provides a result of the diagnosis, wherein
the driving diagnosis device comprises the vehicle state determination device according to any one of claims 1 to 10 as a determination device for determining a time point of starting the brake operation, and
the result of the driving diagnosis is provided when a speed at the time point when the brake operation is started is equal to or greater than a diagnosis speed, which is a speed as a condition of making a driving diagnosis.

12. The driving diagnosis device according to claim 11, wherein the result of the driving diagnosis is provided when a period of time from the time point when the brake operation is started to the time point when the start of determination is instructed is equal to or greater than a standard time necessary for attaining deceleration calculated from the speed at the time point when the brake operation is started.

13. The driving diagnosis device according to claim 11 or 12, comprising a position detecting device, which calculates a speed based on changes in a current position, and a traveling detection section, which detects that the speed calculated by the position detecting device is equal to or greater than a predetermined speed,
wherein the determination starting instruction section, which is included in the determination device, instructs the start of determining the operation state of the brake on the condition that the traveling detection section detects that the speed is equal to or greater than the predetermined speed.

14. The driving diagnosis device according to claim 13, comprising a low-speed detection section, which detects that the speed calculated by the position detecting device is less than a predetermined speed,
wherein the determination starting instruction section, which is included in the determination device, instructs the start of determining the operation state of the brake on the condition that the low-speed detection section detects that the speed is less than the predetermined speed.

15. A vehicle state determination method that is used in a vehicle state determination device for determining an operation state of a brake of a vehicle based on information obtained from an acceleration sensor, thereby determining the operation state of the brake of the vehicle, the vehicle state determination method comprising:
a step for causing a storage section to chronologically store acceleration obtained from the acceleration sensor;
a determination start instruction step for instructing the start of determining the operation state of the brake based on a time point of terminating the brake operation, the time point being estimated based on a fact that an amount of change of the obtained acceleration is less than a predetermined value;
an exclusion period-of-time selecting step for referring to the acceleration stored in the storage section from a time point when the start of determination is instructed in the determination start instruction step toward the past, thereby selecting, as an exclusion period-of-time, a period of time in which the referenced acceleration decreases toward the past; and
an operation start identifying step, in which, for a target period of time, which is before the selected exclusion period-of-time, a time point when the brake operation is started based on changes in acceleration in the target period of time is identified.

16. The vehicle state determination method according to claim 15, wherein the exclusion period-of-time selecting step includes selecting a period of time from the time point when the start of determination is instructed to a time point in the past when acceleration becomes minimum as a period of time in which the referenced acceleration decreases toward the past.

17. The vehicle state determination method according to claim 15 or 16, wherein, in the operation start identifying step, on the condition that the acceleration is equal to or less than 0 [m/s²], the time point when the brake operation is started is identified from the target period of time.

18. The vehicle state determination method according to claim 17, wherein the acceleration within the target period of time is an average of acceleration in a predetermined sampling period of time.

19. The vehicle state determination method according to claim 17 or 18, wherein the time point when the brake operation is started is identified from the target period of time on the condition that acceleration is also equal to or greater than -1.0 [m/s²].

20. The vehicle state determination method according to any one of claims 15 to 19, wherein, in the operation start identifying step, a time point when an absolute value of jerk obtained by differentiating the acceleration is maximum is identified as the time point when the brake operation is started in the target period of time.

21. The vehicle state determination method according to claim 20, wherein, in the operation start identifying step, a time point when the absolute value of jerk becomes maximum is identified from time points when the jerk has a negative value.
